# EUROPEAN PATENT APPLICATION

(11) **EP 3 726 403 A1**
(43) Date of publication of application: **21.10.2020**
(21) Application number: 20158645.0
(22) Date of filing: 21.02.2020
(51) Int. Cl.: G06F 21/00, G10L 15/22, H04L 12/02, H04L 29/06

(54) **METHODS AND DEVICES FOR DELIVERING COMMUNICATIONS PRIVATELY RATHER THAN VIA AUDIBLE AND/OR VISUAL OUTPUT**

(30) Priority: 18.04.2019 US 201916388486
(71) Applicant: BlackBerry Limited, Waterloo, Ontario N2K 0A7 (CA)
(72) Inventor: SEEL, David Brian, Waterloo, Ontario N2K 0A7 (CA); WILLIS, Edward, Snow, Waterloo, Ontario N2K 0A7 (CA); BARKER, Melanie Arlene, Waterloo, Ontario N2K 0A7 (CA)
(74) Representative: MERH-IP Matias Erny Reichl Hoffmann Patentanwälte PartG mbB

(57) **Abstract**

Methods and devices are provided relating to privately communicating information from a smart speaker to a person's headset or other mobile device over a communication channel rather than audibly or visually outputting the information at the smart speaker. This may be used with smart speakers installed in public or common areas. When the smart speaker comes into possession of information intended only for a specific individual, the smart speaker does not necessarily output the information via its loudspeaker in a public manner. Rather, a private communication channel may be established between the smart speaker and the headset or other device of the person. The information may then be transmitted to the person's headset in a private manner rather than being audibly and/or visually outputted by the smart speaker.

## Description

### FIELD

The present disclosure generally relates to delivering information via a smart speaker in a private manner.

### BACKGROUND

Electronic devices, such as smart speakers, can interact with one or more people who are present in the vicinity of the smart speaker. Smart speakers can be deployed in public/common areas, especially in enterprise scenarios. Sometimes smart speakers may have or receive private or sensitive information that is intended for only one or more specific persons. The private information can be anything, such as a reminder of an appointment, meeting, or other event, or notifying and/or audibly outputting an email or text message, or information intended for only a subset of the persons present. Operating in its conventional manner, the smart speaker may audibly output the information so that it can be heard by unintended persons who are present.

For example, a person may not want an audible reminder of a meeting in a way that it could be heard by other persons in the room. For instance, a person may not want an audible reminder of a job interview or a doctor's appointment. Further, a person may not want the smart speaker to read aloud an email message containing private information.

In other instances, the information may not necessarily be private but may only be intended for select individuals in the room. For example, the information may be relevant to only a subset of people present.

Improvements in delivering such information in a private manner are desirable.

### BRIEF DESCRIPTION OF THE DRAWINGS

Embodiments of the present disclosure will now be described, by way of example only, with reference to the attached Figures.
FIG. 1 is a block diagram of an electronic device in accordance with the present disclosure.
FIG. 2A is a diagram illustrating an example scenario where a smart speaker audibly outputs a message when three persons are present.
FIG. 2B is a diagram illustrating an example scenario where a smart speaker transmits a message to a headset rather than audibly outputting the message.
FIG. 2C is a diagram illustrating another example scenario where a smart speaker transmits a message to a headset rather than audibly outputting the message.
FIG. 2D is a table showing example mappings between notification topic identifiers and privacy settings.
FIG. 3 is a diagram showing an example system comprising an electronic device in the form of a smart speaker according to an embodiment of the present disclosure.
FIG. 4 is a data flow diagram showing possible flows of messages and data between various components of a system according to an embodiment.
FIG. 5 is an example process flow diagram according to the present disclosure.
FIG. 6 is an example process flow diagram according to the present disclosure.

### DETAILED DESCRIPTION

This disclosure generally relates to privately communicating information from a smart speaker to a person's headset or other mobile device rather than outputting the information at the smart speaker in a manner in which it could be received by unintended persons. This may be relevant for smart speakers that are installed in public or common areas. When the smart speaker comes into possession of information intended only for a specific individual(s), the smart speaker does not necessarily output this information via its loudspeaker in a public manner. Rather, a private communication channel may be established between the smart speaker and the headset or other device of the person. The information may then be transmitted to the person's headset in a private manner rather than being audibly and/or visually outputted by the smart speaker.

According to an aspect, the present disclosure is directed to an electronic device comprising a memory storing computer-executable instructions, and a processor in communication with the memory and configured to execute the computer-executable instructions to output information audibly and/or visually over a common communication channel, the electronic device being located in a defined geographic area, identify the presence of a mobile device in the defined geographic area, the mobile device associated with a first person, cause to be established a private communication channel between the electronic device and the mobile device, the causing being in response to the identifying and in response to having received an authorization from the mobile device to establish the private communication channel, and transmit private information intended for the first person over the private communication channel to the mobile device rather than over the common communication channel, wherein the common communication channel is maintained during the transmission over the private communication channel.

In an embodiment, the processor is configured to execute the computer-executable instructions to receive the authorization from the mobile device at a same or later time as the identifying the presence of the mobile device.

In an embodiment, the processor is configured to execute the computer-executable instructions to send a request to the mobile device for authorization to establish the private communication channel.

In an embodiment, the processor is configured to execute the computer-executable instructions to send the request in response to detecting the presence of the mobile device in the defined geographic area.

In an embodiment, the processor is configured to execute the computer-executable instructions to send the request in response to the electronic device receiving the private information intended for the first person.

In an embodiment, the authorization received from the mobile device causes the private communication channel to be established without sending a request to the mobile device for authorization to establish the private communication channel.

In an embodiment, the transmitting private information over the private communication channel is performed in response to identifying the presence of a mobile device associated with a different person than the first person in the defined geographic area.

In an embodiment, the authorization received from the mobile device was initiated based on user input at the mobile device.

In an embodiment, the processor is configured to execute the computer-executable instructions to receive, prior to the transmitting, the private information from a remote service.

According to an aspect, the present disclosure is directed to a method for communicating information privately from an electronic device, the method comprising outputting information audibly and/or visually over a common communication channel, the electronic device being located in a defined geographic area, identifying the presence of a mobile device in the defined geographic area, the mobile device associated with a first person, causing to be established a private communication channel between the electronic device and the mobile device, the causing being in response to the identifying and in response to having received an authorization from the mobile device to establish the private communication channel, and transmitting private information intended for the first person over the private communication channel to the mobile device rather than over the common communication channel, wherein the common communication channel is maintained during the transmission over the private communication channel.

In an embodiment, the method further comprises receiving the authorization from the mobile device at a same or later time as the identifying the presence of the mobile device.

In an embodiment, the method further comprises sending a request to the mobile device for authorization to establish the private communication channel.

In an embodiment, the sending of the request is in response to detecting the presence of the mobile device in the defined geographic area.

In an embodiment, the sending of the request is in response to the electronic device receiving the private information intended for the first person.

In an embodiment, the authorization received from the mobile device causes the private communication channel to be established without sending a request to the mobile device for authorization to establish the private communication channel.

In an embodiment, the transmitting private information over the private communication channel is performed in response to identifying the presence of a mobile device associated with a different person than the first person in the defined geographic area.

In an embodiment, the authorization received from the mobile device was initiated based on user input at the mobile device.

In an embodiment, the method further comprises receiving, prior to the transmitting, the private information from a remote service.

According to an aspect, the present disclosure is directed to a non-transitory computer-readable medium having computer-readable instructions stored thereon, the computer-readable instructions executable by at least one processor of an electronic device to cause the performance of the operations in accordance with one or more methods according to the present disclosure.

According to an aspect, the present disclosure is directed to a mobile device comprising a memory storing computer-executable instructions, and a processor in communication with the memory and configured to execute the computer-executable instructions to detect the presence of an electronic device in a defined geographic area, the electronic device configured to output information audibly and/or visually over a common communication channel, the mobile device also in the defined geographic area, cause to be established, in response to the detecting, a private communication channel between the mobile device and the electronic device, and receive private information over the private communication channel rather than over the common communication channel, wherein the common communication channel is maintained while the private information is received over the private communication channel.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The present disclosure, in an aspect, generally relates to an electronic device. An example electronic device is a smart speaker. Other non-limiting examples of electronic devices include mobile, or handheld, wireless communication devices such as wireless headsets, wireless earpieces, cellular phones, cellular smart-phones, wireless organizers, personal digital assistants, computers, tablet computers, mobile internet devices, electronic navigation devices, and non-handheld and/or non-mobile devices, and so forth.

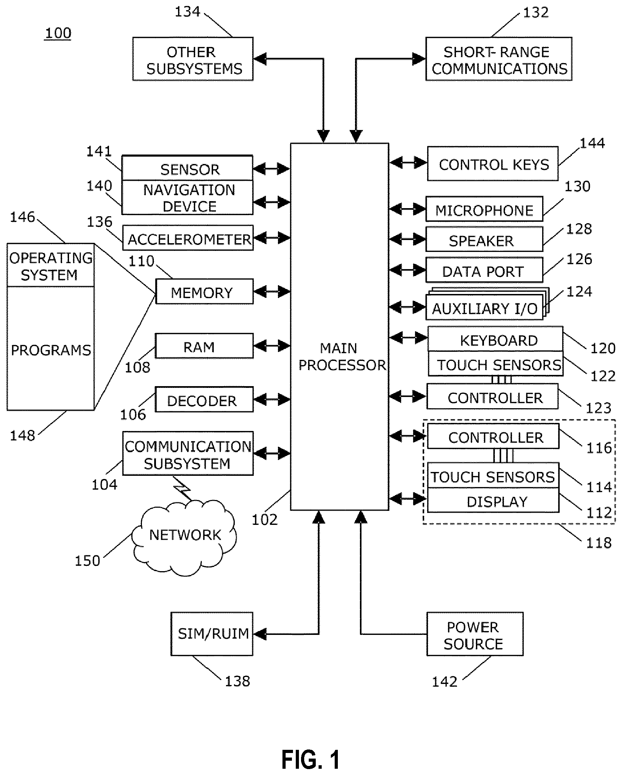

A block diagram of an example electronic device 100 is shown in FIG. 1. Device 100 may be a smart speaker, a wireless headset, or any other suitable type of device. The electronic device 100 includes multiple components, including a processor 102, such as an electronic or hardware processor, which controls the overall operation of the electronic device 100. Communication functions, including data and voice communications, are performed through a communication subsystem 104. Communications subsystems 104 may include any component or collection of components for enabling communications over one or more wired and wireless interfaces. Data received by the electronic device 100 may be decompressed and decrypted by a decoder 106. The communication subsystem 104 may receive messages from and send messages to a wireless network 150. The wireless network 150 may be any type of wireless network, including, but not limited to, data wireless networks, voice wireless networks, and networks that support voice and/or data communications. A power source 142, such as one or more rechargeable batteries or a port to an external power supply, may power the electronic device 100.

The processor 102 may interact with other components, such as a Random Access Memory (RAM) 108, memory 110, an auxiliary input/output (I/O) subsystem 124, a data port 126, a speaker 128, a microphone 130, short-range communications 132, and other device subsystems 134. The speaker 128 is utilized to output audible signals. In an embodiment, for example when device 100 is a smart speaker, speaker 128 may be a loudspeaker. In another embodiment, for example when device 100 is a mobile device such as a headset, speaker 128 may comprise an earpiece speaker to output audible signals when a user's ear is very close to the speaker. In an embodiment, the processor 102 may interact with a touch-sensitive display 118 and/or a keyboard 120.

The touch-sensitive display 118 includes a display 112 and touch sensors 114 that are coupled to at least one controller 116 that is utilized to interact with the processor 102. Input via a graphical user interface is provided via the touch-sensitive display 118. Information, such as text, characters, symbols, images, icons, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

The keys of the keyboard 120 may include touch sensors 122 coupled to a controller 123 to detect touch input thereon. The controller may be a keyboard controller 123 as illustrated in FIG. 1. Alternatively, the keys of the keyboard 120 may be coupled to the controller 116 utilized to detect touches using the touch sensors 114 of the touch-sensitive display 118.

The processor 102 may also interact with control keys 144 and, optionally, a navigation device 140. The control keys 144 may include, for example, a send key, a menu key, an escape key, an end key, or any other suitable control keys. The navigation device 140 may be a touch-sensitive track pad, an optical joystick, or any other suitable navigation device to interface with a user to provide input. The navigation device 140 may be utilized, for example, to navigate or scroll through information on a display, control a cursor or other indicator, edit information, and so forth.

The processor 102 may also interact with a biometric sensor 141 for obtaining data to authenticate a user. The biometric sensor 141 may be a fingerprint sensor disposed on the navigation device for detecting a touch thereon and obtaining fingerprint data upon receipt of a touch on the navigation device. Other biometric sensors may also be successfully implemented. For example, an iris scanner or other suitable detector may be utilized for the purpose of authenticating a user.

To identify a subscriber for network access, the electronic device 100 may utilize a Subscriber Identity Module or a Removable User Identity Module (SIM/RUIM) card 138 for communication with a network, such as the wireless network 150. Alternatively, user identification information may be programmed into memory 110.

The electronic device 100 includes an operating system 146 and software programs, applications, or components 148 that are executed by the processor 102 and are typically stored in a persistent, updatable store such as the memory 110. Additional applications or programs may be loaded onto the electronic device 100 through the wireless network 150, the auxiliary I/O subsystem 124, the data port 126, the short-range communications subsystem 132, or any other suitable subsystem 134.

A received signal such as a voice command or other voice signal, a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the electronic device 100 is similar. The speaker 128 outputs audible information converted from electrical signals, and the microphone 130 converts audible information, such a voice signals, into electrical signals for processing.

As indicated above, the biometric sensor 141 may be a fingerprint sensor disposed on the navigation device 140 for detecting a touch thereon and obtaining fingerprint data upon receipt of a touch on the navigation device. The fingerprint sensor may include a plurality of transmit and receive electrodes that are disposed in a grid pattern. The transmit electrodes are very closely spaced and receive electrodes are very closely spaced relative to the electrodes of the touch-sensitive display, for example, to provide a very fine grid pattern. The fine grid pattern provides very fine resolution suitable for identifying a fingerprint pattern and for detecting conductivity of ridges and valleys in a fingerprint.

Optionally, the navigation device 140 may be utilized to detect the presence of a finger on the biometric sensor 141 and, in response, the biometric sensor 141 may obtain fingerprint data for authentication purposes.

The processor 102 receives the biometric data from the sensor 141 and compares the biometric data to biometric data stored, for example, in memory 136 to authenticate a user. A match or at least partial match of the biometric data from the sensor 141 results in authentication. The biometric data may therefore be utilized, for example, to unlock the electronic device 100, to access applications, documents, or information on the electronic device 100, or for any other suitable purpose.

The communications subsystem 104, auxiliary input/output (I/O) subsystem 124, data port 126, short-range communications 132, and other device subsystems 134 may implement interfaces including but not limited to USB, Ethernet, high-definition multimedia interface (HDMI), Firewire (e.g. IEEE 1394), Thunderbolt™, Wi-Fi™ (e.g. IEEE 802.11), WiMAX (e.g. IEEE 802.16), Bluetooth™, or Near-field communications (NFC), as well as GPRS, UMTS, LTE, LTE-A, and dedicated short range communication (DSRC).

In addition, device 100 may include one or more of transmitters, receivers, and antenna elements (none are shown), for example in communication subsystem 104 and/or short-range communications module 132. In at least some embodiments, the electronic device may have geographic positioning functionality, for example to determine a geographical position of the electronic device or for receiving timing signals for time synchronization of the device with other systems. In at least some embodiments, the electronic device may be capable of receiving Global Positioning System (GPS) signals. Therefore in at least one embodiment, as shown in FIG. 1, the electronic device may comprise a GPS radio or receiver (not shown). However, other embodiments may comprise and use other subsystems or components for, for example, determining the geographical position of the electronic device or for receiving timing signals for time synchronization. In some embodiments, the electronic device may be configured to determine a geographic location using Wi-Fi.

The electronic device 100 of FIG. 1 is merely an example and is not meant to be limiting. Various embodiments may utilize some or all of the components shown or described. Some embodiments may use other components not shown or described but known to persons skilled in the art. Furthermore, a device may contain multiple instances of a component, such as multiple electronic device, processors, memories, transmitters, receivers, etc. Various other options and configurations are contemplated.

A smart speaker, or other electronic device, may interact with one or more persons that are physically present. Sometimes smart speakers may have or receive private or sensitive information that is intended to be delivered to a person in a private manner. In other words, such private or sensitive information is not to be outputted in a way that it would be received by any unauthorized or unintended persons that are present, for example audibly and/or visually. The private or sensitive information may be anything, such as a reminder of an appointment, meeting, or other event, a notification and/or audibly outputting an email or text message, or information intended for only a subset of the persons who are present.

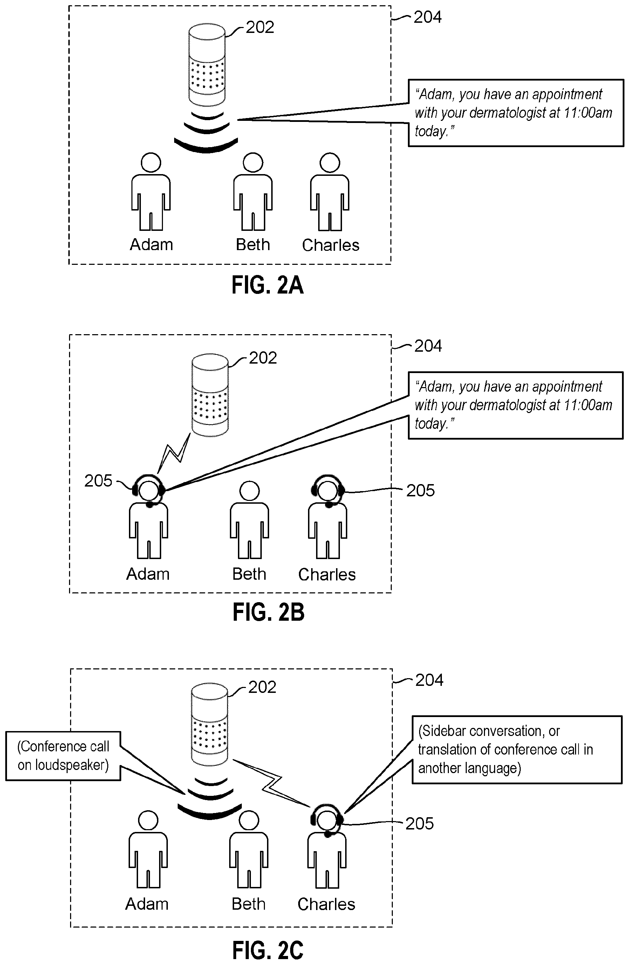

FIG. 2A is a diagram illustrating an example scenario where three persons, Adam, Beth, and Charles, are physically present in the vicinity of a smart speaker 202. The vicinity of smart speaker 202 may be bounded or otherwise considered to be a defined geographic area 204. In this example, area 202 corresponds to the location and size of a room in a building. Area 202 as depicted is merely an example; its size and shape is arbitrary in the figure. Area 202 may be any suitable geographic area. In an embodiment, it may be based on the location and dimensions of a room. In an embodiment, it may be based on the capabilities of smart speaker 200.

With limited or no control as to when and/or how information specific to particular persons is outputted from smart speaker 202, for example audibly and/or visually, the smart speaker 202 may simply output the information via its loudspeaker and/or display as the information comes in. In this regard, the outputting via a loudspeaker and/or display is considered to be performed over a common communication channel since all persons who are present are able to receive the information. FIG. 2A shows an example audible message *"Adam you have an appointment with your dermatologist at 11:00am today"* being outputted from smart speaker 202 with no regard to the fact that other persons, namely Beth and Charles, are present. Adam may be fine with Beth and Charles hearing his reminder notification. In another situation, Adam may not want the reminder notification to be outputted when unintended persons, or anyone, is present.

FIG. 2B is a diagram illustrating another example scenario where three persons, Adam, Beth, and Charles, are physically present in the defined geographic area 204. However, in this example, according to the present disclosure, Adam and Charles each have an electronic device 205 in the form of a wireless headset. Rather than the smart speaker 202 audibly and/or visually outputting the reminder notification via the common communication channel, and thus risking Beth and/or Charles hearing and/or seeing the notification, the notification is communicated to Adam's headset 205 in a non-audible and/or non-visual manner. This may be done via wireless communication. The notification may then be outputted at Adam's headset 205, for example via an earpiece speaker of headset 205 so that only Adam may hear the audible notification. In this example, and even more generally, smart speaker 202 may be able to either detect or otherwise become aware of the presence of Adam's headset 205 within the defined geographic area 204 so that smart speaker 202 may transmit the notification to Adam's headset 205 over a private communication channel. Similarly, private information intended for Charles may be transmitted to Charles' headset 205 over a private communication channel established between Charles' headset 205 and smart speaker 202.

It is to be noted that headset 205 could be any other suitable type of electronic device, including a mobile device. Further, the notification may be outputted at Adam's device 205 in a different manner, for example visually on a display of the device 205.

FIG. 2C is a diagram illustrating another example scenario where three persons, Adam, Beth, and Charles, are physically present in the defined geographic area 204. Smart speaker 202 is audibly outputting a conference call via its loudspeaker so that Adam, Beth, and Charles can hear it. The conference call is therefore being transmitted via the common communication channel. Charles has an electronic device 205 in the form of a wireless headset. Information, possibly in addition to the conference call, is communicated to Charles' headset 205 over a private communication channel rather than being audibly outputted by smart speaker 202 over the common communication channel. In this manner, neither Adam nor Beth can hear this information. While the private information is being transmitted over the private communication channel, the common communication channel may be maintained. The channel may be maintained in the sense that is kept active and/or open, and capable of communicating information. In this example, the private communication channel is a wireless channel. For example, a subset of the callers on the conference call may participate in a private sidebar conversation to the conference call, or otherwise receive private information separate from the conference call, using their headsets 205. This subset of callers may, for example, mute the microphones on the smart speakers in their locations to that they can carry on the sidebar conversation. In an embodiment, the sidebar conversation may include a translation of the conference call into another language, and/or include additional commentary or information to the conference call. This private sidebar conversation is not audibly outputted from the smart speaker 202, for example because smart speaker 202 is already outputting the conference call and perhaps also because the sidebar conversation is private and thus is not intended to be heard by unauthorized persons. It is to be noted that information may also be communicated from headset 205 to smart speaker 202.

In another possible application, not shown, smart speaker 202 may communicate different information to different persons simultaneously. For example, smart speaker 202 may send directions to two different persons for different destinations.

In an embodiment, smart speaker 202 or other device may determine or become aware of whether a notification is to be delivered to a person's device over a private communication channel rather than outputted audibly and/or visually from smart speaker 202. The determination may be made based on, for example, whether the notification contains private information. A notification containing private information may be delivered over a private communication channel.

It is to be noted that although embodiments and examples described herein relate to the handling and selective outputting of notifications, the present disclosure is not limited to only notifications. Rather, the teachings according to the present disclosure cover and apply to any type of information.

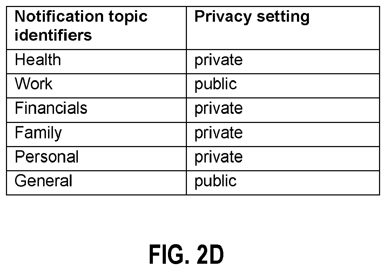

FIG. 2D is a table showing some example mappings between notification topic identifiers, or types, and privacy settings assigned to the topic identifier. Notification topic identifiers may be used to categorize the content of notifications, such as for example health, work, financials, family, personal, general, etc. Each notification topic identifier may be assigned a privacy setting such as "private" or "public", or any other suitable setting. In an embodiment, a private setting may indicate that a notification is to be delivered only over a private communication channel whereas a public setting indicates that the notification may be delivered over a common communication channel, such as audibly and/or visually outputted via the loudspeaker and/or display of the smart speaker 202.

Mappings between notification topic identifiers and privacy settings may be generated in any suitable way or combination of ways. For example, mappings may be built automatically by scraping of email and/or text messages. For instance, it may be ascertained that "health" is "private" based on analyzing an email containing health related information and also contains an indication the email is private (e.g. in the body of the email or in some email field).

For example, mappings may be generated based on user configuration. For example, a person may go through a setup wizard or other interface to create topic identifiers and/or assign privacy settings to topic identifiers.

Further, mappings may be generated based on learning from mistakes. For example, after a mistake has been made in divulging sensitive information, the user may provide an indication, such as by saying "that was private", and a new mapping can be added or an existing mapping may be modified.

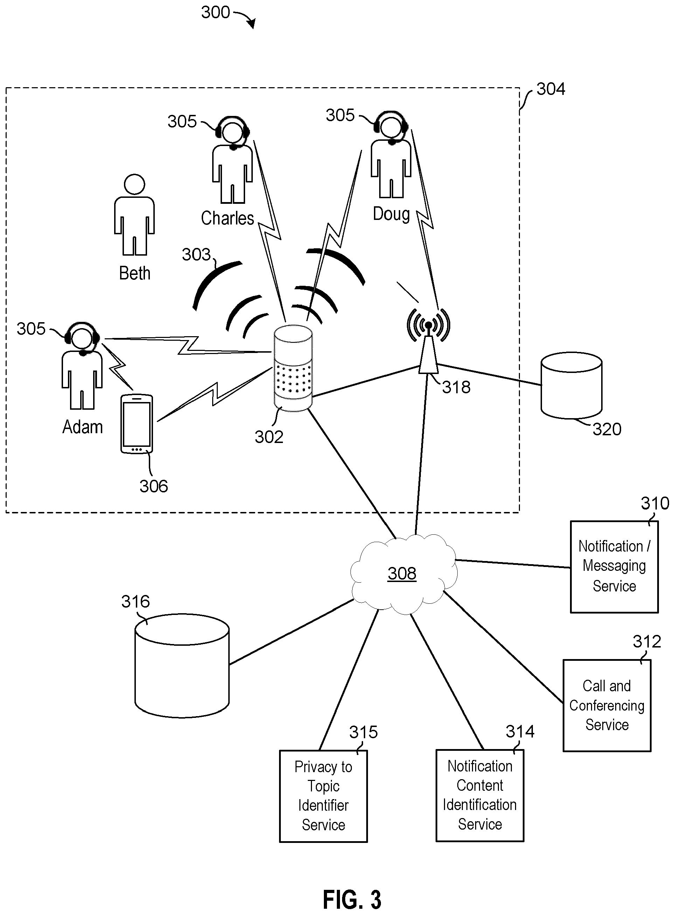

FIG. 3 is a diagram showing an example system 300 comprising an electronic device 302, in the form of a smart speaker, according to an embodiment of the present disclosure. Smart speaker 302 may be in accordance with electronic device 100 of FIG. 1 and may include loudspeaker for outputting audible signals 303. Although not shown, smart speaker 302 may comprise a display device for visually outputting information. Several persons, namely Adam, Beth, Charles, and Doug are present in the defined geographic area 304. Adam, Charles, and Doug each have a mobile device 305 in the form of a headset. Further, one or more persons may have another electronic device 306, such as a smart phone, tablet, or smart watch.

It is noted that while the embodiments described herein, including FIG. 3, include headsets and smart speakers, this is not intended to be limiting. The teachings of the present disclosure contemplate and apply to types of devices other than smart speakers and headsets, such as other electronic devices and mobile devices.

Smart speaker 302 may be communicatively connected to one or more other devices via a network 308. System 300 may comprise a distributed system where, for example, one or more client devices access, via network 308 or other communication links, services hosted at one or more server devices. At least some of these services may be referred to as cloud-based services.

A notification messaging service 310 may be configured for sending smart speaker 302 information, possibly private information, to be delivered to one or more specific persons. The information may be a notification, a message, or any other suitable type of information. As a mere example, notification service 310 may comprise or communicate with a mail server or calendar service (not shown) to receive notifications of new emails, new invitations, and/or reminders for a given person. Of course, the information to be delivered to the given person may be of any other suitable types.

A notification content identification service 314 may be configured to receive a notification, for example from the smart speaker 302 or from the notification service 310, and to then select a notification topic identifier that best corresponds to the content of the notification. For example, service 314 may receive a notification from notification service 310 in the form of a reminder of a doctor appointment today at 11:00AM. Service 314 may ascertain from the content of the notification that the notification relates to "Health". This may be accomplished in any suitable way. For instance, service 314 may scan or parse text content of the notification for certain keywords, here such as "doctor", to select an appropriate notification topic identifier. The selection may be done using mappings of terms to notification topic identifier, for example "doctor" maps to the topic identifier "Health". Other mere example topic identifiers are shown in FIG. 2D. As would be appreciated by the skilled person, in some embodiments, machine learning techniques may be used here.

A privacy setting to notification topic identifier service 315 may be configured to generate, store, and/or manage mappings, for example mappings between notification topic identifiers and privacy settings, such as the examples shown in FIG. 2D. Once a notification topic identifier has been selected for the new notification, the notification topic identifier may be sent to privacy setting to notification topic identifier service 315 to determine the privacy setting associated with that particular topic identifier. The privacy setting may be then sent to smart speaker 302 to enable smart speaker 302 to know or determine whether to deliver the notification audibly from its loudspeaker (and/or visually via a display) or via the private communication channel. It is to be appreciated that the above described transmissions and flow of data between smart speaker 302, notification service 310, notification content identification service 314, and/or privacy setting to notification topic identifier service 315, as well as the particular connections illustrated in FIG. 3, are merely meant as examples. Similar functionally may be achieved with differing transmissions and flows of data between the mentioned entities.

Further, a call and conferencing service 312 may provide audio and/or video calling or conferencing capabilities. In addition to enabling the audio and/or video calling, conferencing service 312 may provide additional functions such as managing call schedules, sending and managing call invitations and reminders, managing lists of invitees and/or participants, room bookings, and language translation services for call content. Conferencing service 312 may, for example, transmit a notification to smart speaker 302 to notify one or more persons of an incoming voice, video, or conference call, or to provide a call reminder or invitation.

It is noted that services 310, 312, 314, 315 are merely examples of services and/or systems that may be part of or communicate with system 300. For example, smart speaker 302 may receive private information, messages, and/or data from other services, services, and/or devices.

In an embodiment, data generated, stored, and/or managed by one or more of services 310, 312, 314, 315, and/or any other component, may be stored in one or more databases 316. Although a specific number of databases is shown, it is to be understood that system 300 may include any suitable number of databases.

In an example, notification messaging service 310 may receive or otherwise become aware of a notification for Adam in the form of a reminder of a dermatologist appointment today at 11:00AM.

Smart speaker 302 may receive the message from notification messaging service 310 and determine how to handle the notification (e.g. if, how, and/or when to deliver the notification). In the example, since a headset 305 registered to Adam is present in the defined geographic area 304, smart speaker 302 may not output the notification over the common communication channel, for example an audible output via its loudspeaker (and/or visually output). Rather, smart speaker 302 may communicate the notification to Adam's headset 305, possibly over a private communication channel established between headset 305 and smart speaker 302. The common communication channel may be maintained while the private information is communicated over the private communication channel.

In another example, similar to the one shown in FIG. 2C, smart speaker 302 may enable a conference call, for example by outputting the call via its loudspeaker so that Adam, Beth, Charles, and Doug can hear it. The conference call is therefore being transmitted via the common communication channel. The conference call may be conducted in cooperation with one or more of notification messaging service 310 and call and conferencing service 312. A subset of the callers on the conference call may participate in a private sidebar conversation to the conference call, or otherwise receive private information, using their headsets 305. The private information may be communicated over one or more private communications established between smart speaker 302 and the subset of persons. The common communication channel may be maintained, meaning here the conference call is still audibly outputted, while the private information is communicated via the private communication channel(s). It is to be noted that information may be communicated from headsets 305 to smart speaker 302.

In the example, Charles and Doug may receive private information at their headsets 305 over at least one private communication channel with the smart speaker 302. Separate private communication channels may be established between the smart speaker 302 and each of the headsets 305 of Charles in Doug. In another embodiment, a single private communication channel may be established and used by both the headsets 305 of Charles and Doug.

In another embodiment, a determination of how to handle the private information (e.g. notification) may be performed somewhere other than at the smart speaker 302, for example another device or server in distributed system 300.

In at least some embodiments, it is possible for smart speaker 302 to transmit private information to a headset 305 registered to a person over a private communication channel on the basis that smart speaker 302 is able to either detect or otherwise become aware of the presence of the person's headset 305 within the defined geographic area 304.

The ability of smart speaker 302 to detect or become aware of the presence of a headset 305 may be accomplished using one or more techniques. In an embodiment, smart speaker 302 may have, or have access to, information relating to the identification of the specific headsets 305 that are present in the defined geographic area. Further, smart speaker 302 may have, or have access to, information relating to the identification of persons to which the present headsets 305 are registered or otherwise associated.

In an embodiment, the presence of headsets 305 in the defined geographic area 304 may be detected based on the use of a localized device detector 318. Localized device detector 318 may be a standalone system or device as shown FIG. 3, or it may be part of smart speaker 302. In other embodiments, localized device detector 318 may be part of another system or device, such as a security system, computer network, cellular system, or any other computing system that includes, or has access to, data identifying devices in a geographic area. Such a system may include, for example, a private Wi-Fi network capable of identifying mobile devices or stationary devices attached to the network in the coverage area of the Wi-Fi network.

Detecting the presence of headsets 305 may be based on data from one or more local access points in a wireless network. In the embodiment of FIG. 3, localized device detector 318 is shown as being implemented as, or integrated with, such a local access point. In some embodiments, a secure device manager is capable of authenticating headsets 305 or other devices (e.g. using a certificate) and securely running code on the device to obtain device location information, such as GPS data. In another example, it may include local Bluetooth network or other short-range communication system capable of identifying headsets 305 or other devices attached to the network in its coverage area. In yet another example, it may include a cellular network capable of identifying headsets 305, mobile devices, or other devices in communication with one or more base stations in the cellular network in the vicinity of an area of interest. In yet further examples, localized device detector 318 may include a system that obtains location data from one or more devices in an area. As an example, some facilities may include wireless location systems that may use a combination of Wi-Fi fingerprinting and GPS location reporting to track the location of devices, in particular mobile devices, within a facility. Devices may be also communicate location data through attachment to a wired network port, e.g. Ethernet port, having a known location. In some examples, localized device detector 318 may have pre-stored location data for a device having a fixed location, such as a computing kiosk or other such device. Other such devices and/or systems for identifying devices within a defined geographic area will be appreciated by those of ordinary skill in the art.

Again referring to FIG. 3, localized device detector 318 in this embodiment includes or communicates with a database, such as database 320, containing device-user associations, such as registrations. The device-user associations provide information that associates one or more users (persons) with each device, for example headsets 305. In some cases the association is one-to-one. In some cases, a device may be associated with more than one user, or may be associated with a plurality of users belonging to a category or class. The stored set of associations may be a list of device identifiers and, for each device identifier, one or more user identifiers, structured in any suitable data structure.

Localized device detector 318 may provide information regarding the detected physical presence of devices, for example in a vicinity of smart speaker 302, for example in a defined geographic area 304. Defined geographic area 304 may be defined to correspond to the confines of a room or any other suitable area, and may be subject to any resolution and/or range limitations of the localized device detector 318 and/or smart speaker 302.

In an embodiment, as shown in FIG. 3 in relation to Adam, the smart speaker 302 may communicate with another device 306, such as a smart phone, for example establishing a private communication channel. Device 306 in turn may communicate with headset 305. In this way, private information may be communicated from smart speaker 302 to device 306 and then to headset 305. Communications may flow in the opposite direction as well.

In an embodiment, two or more techniques for detecting devices present in the defined geographic area may be used in combination, for example to provide a higher degree of certainty. In other words, one technique may be used to corroborate the findings produced by another technique. In other embodiments, other techniques for learning which persons are in the room may be used.

Although various components in FIG. 3 are shown as being connected via network 308, this is not limiting. Rather, the ways in which components are shown to be connected are only examples; components may be connected in any other suitable ways. For example, two or more components may configured to communicate directly. Further, although some services are shown as being implemented on devices separate from smart speaker 302, this is not meant to be limiting. In some embodiments, one or more services or other functions may be partly or wholly implemented on smart speaker 302.

System 300 may be configured to automatically know whether to send information, including private information, intended for a specific person to the smart speaker 302. For example, if smart speaker 302 is installed in a public or common area, and localized device detector 318 has never, or not recently, detected a device registered to Adam present in the defined geographic area 304, then it may not make much sense for information intended for Adam, for example information from notification service 310 or conferencing service 312, to be sent to smart speaker 302 since there is little or no reason to believe Adam is in the defined geographic area 304 to receive the information.

In another scenario, a current, recent, or past detection of a physical presence of Adam's headset 305 by a device, such as smart speaker 302 or localized device detector 318, may be stored somewhere in system 300, for example in a database 316. The stored information may include identifiers of Adam and/or his device(s), a time stamp of the last detected presence, and the smart speaker 302 where the detection occurred. The system 300 may use this information to determine if and where to route information intended for Adam.

In an example, information for Adam in the form of a reminder of a dermatologist appointment today at 11:00AM is generated or received at notification service 310. System 300 may check to see if a current or recent location of a device registered to Adam is known, for example by performing a lookup in database 316. If it is determined that a current or recent location of Adam's device Adam is known, for example in the defined geographic area 304, the system 300 may route the information to smart speaker 302 rather than or in addition to transmitting the information a conventional manner, for example sending the notification to Adam's smart phone or desktop computer.

In a similar manner as for Adam's headset 305, private communication channels may be established between smart speaker 302 and the headsets 305 of other persons (e.g. Charles, Doug) to communicate private information to/from these other persons to/from smart speaker 302.

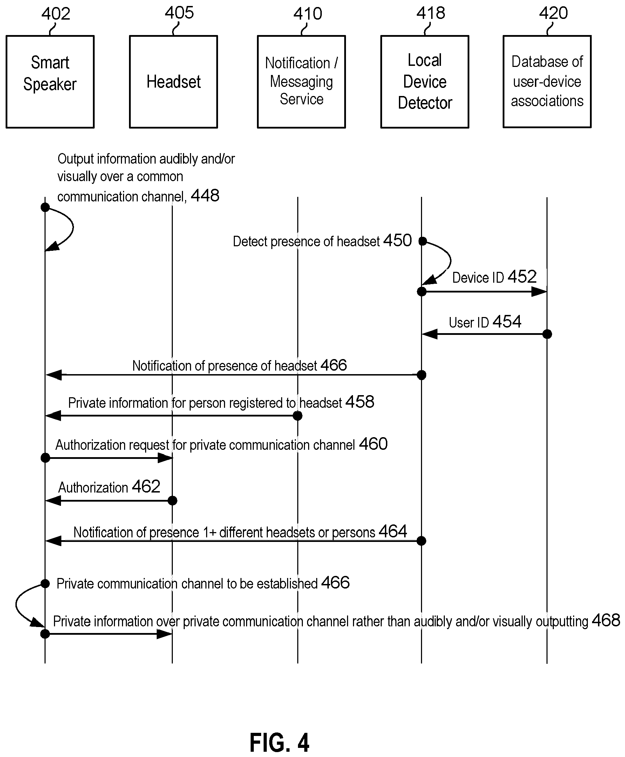

FIG. 4 is a data flow diagram showing possible flows of messages and data between various components of a system according to an embodiment. Some of these transmissions have already been described above.

Smart speaker 402 may output 448 information audibly and/or visually over a common communication channel. The smart speaker 402 is located in a defined geographic area.

Local device detector 418 may detect 450 the presence of a headset 405 in the defined geographic area, and send information 452 identifying headset 405, such as a device identifier, to a database of user-device associations 420. Database 420 may be similar to database 320 in FIG. 3 described above. Database 420 may send information 454 identifying a user associated with headset 405 back to local device detector 418. Local device detector 418 may send a notification 456 to smart speaker 402 of the detection or otherwise knowledge of the presence of headset 405.

Notification messaging service 410 may send information 458, possibly private information, to be delivered to the person associated with headset 405 to smart speaker 402.

Smart speaker 402 may send an authorization request 460 to headset 405 to have a private communication channel established between smart speaker 402 and headset 405. In an embodiment, the authorization request 460 may be sent in response to the notification 456 of the detection or otherwise knowledge of the presence of headset 405. In an embodiment, the authorization request 460 may be sent in response to smart speaker 402 receiving private information intended for the person from notification messaging service 410 or elsewhere. In an embodiment, rather than smart speaker 402 sending an authorization request 460 to headset 405, smart speaker 402 may audibly output the authorization request.

Headset 405 may send an authorization 462 to smart speaker 402 to have a private communication channel established. In an embodiment where smart speaker 402 audibly outputs the authorization request, an authorization may be in the form of a verbal confirmation from the person. The verbal confirmation may be authenticated, in any suitable manner, to ensure it came from the specific person. In an embodiment, the authorization 462 may be sent in response to the authorization request 460 sent by the smart speaker 402. In an embodiment, the authorization 462 may be sent in response to user input at headset. In an embodiment, the authorization 462 received from the headset causes the private communication channel to be established 466 regardless of whether a request 460 was sent to the headset for authorization to establish the private communication channel. In such a case, the headset 405 may initiate the establishment of the private communication channel rather than waiting for the smart speaker 402 to do the initiating. Further, as previously described, in an embodiment, an authorization from headset 405 may not be required if an authorization was previously provided to smart speaker 402, for example a previous time a private communication channel was established. In such a scenario, transmissions 460 and 462 may be omitted when smart speaker 402 previously received an authorization from headset 405.

Further, in an embodiment, headset 405 may detect or otherwise become aware of the presence of smart speaker 402 in the defined geographic area. This may be accomplished in any suitable way. Headset 405 may initiate the establishment of a private communication channel rather than rather than waiting for the smart speaker 402 to initiate the establishment. Headset 405 may itself cause the private communication channel to be established, or it may request smart speaker 402 to establish the channel. For example, as previously noted, headset 405 may send an authorization 462 to smart speaker 402 for this purpose.

In an embodiment, local device detector 418 may send information 464 notifying smart speaker 402 of the presence of one or more headsets in the defined geographic area that are not registered to the person for whom the private information is intended. This information may be used by smart speaker 402 to determine whether to audibly output the private information via its loudspeaker. For example, if there are no headsets detected in the defined geographic area that are not registered to the person for whom the private information is intended, then smart speaker 402 may audibly output the private information.

After headset 405 authorizes the private communication channel, smart speaker 402 may cause the private communication channel to be established 466. In an embodiment, the establishment 466 of the private communication channel is performed in response to identifying the presence of a headset registered to a different person than the first person in the defined geographic area. In an embodiment, the establishment 466 of the private communication channel is performed in response to identifying the presence of a different person than the first person in the defined geographic area.

In an embodiment, an authorization to establish the communication channel from headset 405 to smart speaker 402 may be only required initially and then not required for subsequent invocations of the communication channel. For example, once a private communication has been established, a next time the headset 405 comes into the defined geographic area, the communication channel may be established without another authorization from headset 405. In such a way, the re-establishment of the communication channel may be performed based on a previously received authorization from headset 405. In such a case, smart speaker 402 may omit sending a request to headset 405 for authorization. However, in a different embodiment, similar to those previously described, the authorization from the headset may be received at the smart speaker at the same or at a later time as the identifying the presence of the headset. In other words, the establishment of the communication channel is not based on a previously received authorization.

In an embodiment, an authorization may only be valid for a specific user such that if the headset had previously sent an authorization associated with a first user, an authorization may be required if a second user used the same headset in the defined geographic area and the headset had not previously sent an authorization associated with the second user.

Accordingly, the private communication channel may be established in response to identifying the presence of the headset and in response to having received an authorization from the headset.

A private communication channel may be established using any suitable wireless or wired technology or protocol, for example but not limited to Bluetooth, Wi-Fi, and NFC. The establishment of the channel may be initiated by smart speaker 402 or headset 405.

Smart speaker 402 may then transmit private information 468 intended for the person associated with the headset 405 over the private communication channel to headset 405. The information may be sent over the private communication channel rather than over the common communication channel by the smart speaker 402, for example audibly via its loudspeaker and/or visually via a display. The common communication channel may be maintained during the transmission over the private communication channel.

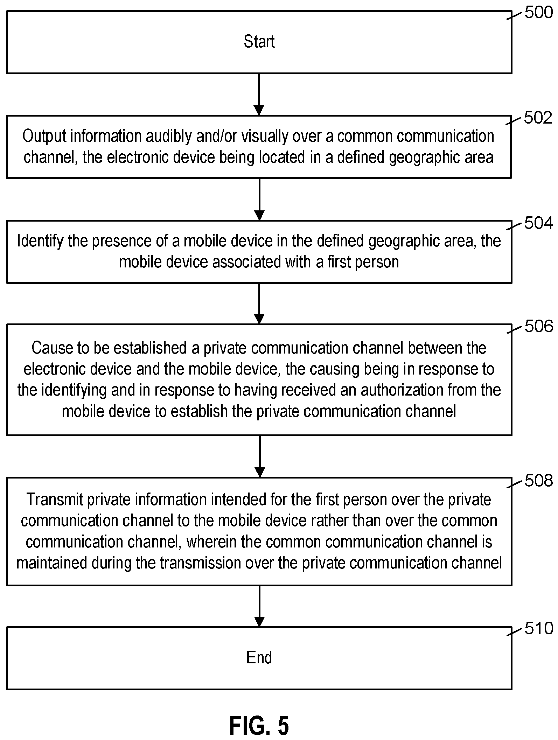

FIG. 5 is an example process flow diagram for communicating information privately from an electronic device, such as a smart speaker, according to the present disclosure.

The process starts at block 500 and proceeds to block 502 where the electronic device outputs information audibly and/or visually over a common communication channel, the electronic device being located in a defined geographic area.

The process proceeds to block 504 where the presence of a mobile device in the defined geographic area, such as a smart speaker, is identified. The mobile device is associated with a first person.

The process proceeds to block 506 where a private communication channel is cause to be established between the electronic device and the mobile device, where the causing is in response to the identifying of the mobile device and in response to having received an authorization from the mobile device to establish the private communication channel.

The process proceeds to block 508 where the electronic device transmits private information intended for the first person over the private communication channel to the mobile device rather than over the common communication channel, wherein the common communication channel is maintained during the transmission over the private communication channel.

The process proceeds to block 510 and ends.

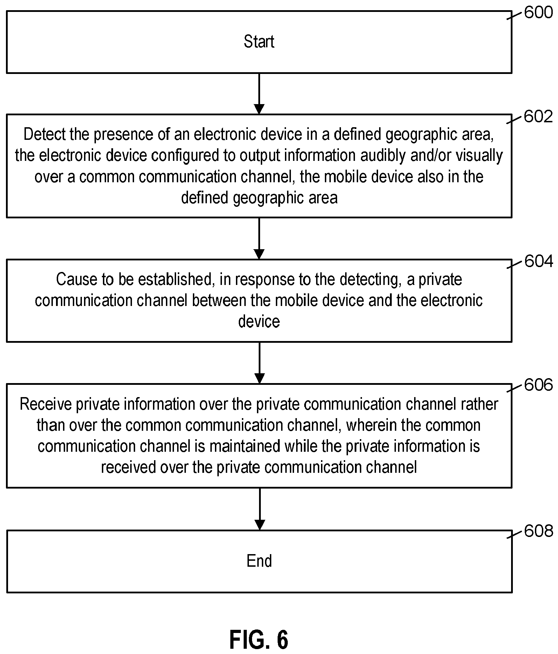

FIG. 6 is an example process flow diagram at a mobile device according to the present disclosure.

The process starts at block 600 and proceeds to block 602 where the mobile device detects the presence of an electronic device in a defined geographic area, the electronic device configured to output information audibly and/or visually over a common communication channel, the mobile device also in the defined geographic area. In an example, the mobile device may be a headset and the electronic device may be a smart speaker.

The process proceeds to block 604 where the mobile device causes to be established, in response to the detecting, a private communication channel between the mobile device and the electronic device.

The process proceeds to block 606 where the mobile device receives private information over the private communication channel rather than over the common communication channel, wherein the common communication channel is maintained while the private information is received over the private communication channel.

The process then proceeds to block 608 and ends.

The term vicinity is used herein to refer to the physical or geographic area or region near or about a place or thing. In an embodiment, the term may be used to refer to a defined geographic area, for example the boundaries of a room or other space, or a specific range or distance.

The term private information is used herein to refer to information that may not want to be shared with one or more persons. For example, the information may be of a confidential nature, or the information may be non-confidential but intended for some persons but not other persons. For instance, the information may only be relevant or in a language suitable to certain persons).

The term private communication channel is used herein to refer to a communication channel established to convey private information to the headset of a person in a private manner, meaning without communicating the private information to unintended persons or devices.

At least some embodiments described herein relate to or include a smart speaker, a headset, and/or audible output of information. However, the scope of the present disclosure is not intended to be limited to embodiments involving only smart speakers, headsets, and/or audible outputs. The teachings according to the present disclosure may be used or applied in or with other types of electronic devices and/or other forms of outputting information (e.g. visual, tactile, broadcast, etc.), and/or in other applications and/or in other fields.

The teachings according to the present disclosure may be implemented at or performed by any suitable network element or combination of network elements. A network element may be a network side electronic device, such as a server, or a user side electronic device, such as a smart speaker, headset, mobile device, or other electronic device. These network side and user side devices are only examples and are not intended to be limiting.

In the preceding description, for purposes of explanation, numerous details are set forth in order to provide a thorough understanding of the embodiments. However, it will be apparent to one skilled in the art that these specific details are not required. In other instances, well-known electrical structures and circuits are shown in block diagram form in order not to obscure the understanding. For example, specific details are not necessarily provided as to whether the embodiments described herein are implemented as a computer software, computer hardware, electronic hardware, or a combination thereof.

Embodiments of the disclosure may be represented as a computer program product stored in a machine-readable medium (also referred to as a computer-readable medium, a processor-readable medium, or a computer usable medium having a computer-readable program code embodied therein). The machine-readable medium may be any suitable tangible, non-transitory medium, including magnetic, optical, or electrical storage medium including a diskette, compact disk read only memory (CD-ROM), memory device

(volatile or non-volatile), or similar storage mechanism. The machine-readable medium may contain various sets of instructions, code sequences, configuration information, or other data, which, when executed, cause a processor to perform steps in a method according to an embodiment of the disclosure. Those of ordinary skill in the art will appreciate that other instructions and operations necessary to implement the described implementations may also be stored on the machine-readable medium. The instructions stored on the machine-readable medium may be executed by a processor or other suitable processing device, and may interface with circuitry to perform the described tasks.

The structure, features, accessories, and alternatives of specific embodiments described herein and shown in the Figures are intended to apply generally to all of the teachings of the present disclosure, including to all of the embodiments described and illustrated herein, insofar as they are compatible. In other words, the structure, features, accessories, and alternatives of a specific embodiment are not intended to be limited to only that specific embodiment unless so indicated.

In addition, the steps and the ordering of the steps of methods and data flows described and/or illustrated herein are not meant to be limiting. Methods and data flows comprising different steps, different number of steps, and/or different ordering of steps are also contemplated. Furthermore, although some steps are shown as being performed consecutively or concurrently, in other embodiments these steps may be performed concurrently or consecutively, respectively.

For simplicity and clarity of illustration, reference numerals may have been repeated among the figures to indicate corresponding or analogous elements. Numerous details have been set forth to provide an understanding of the embodiments described herein. The embodiments may be practiced without these details. In other instances, well-known methods, procedures, and components have not been described in detail to avoid obscuring the embodiments described.

The above-described embodiments are intended to be examples only. Alterations, modifications and variations may be effected to the particular embodiments by those of skill in the art without departing from the scope, which is defined solely by the claims appended hereto.

## Claims

1. An electronic device comprising:
a memory storing computer-executable instructions; and
a processor in communication with the memory and configured to execute the computer-executable instructions to:
output information audibly and/or visually over a common communication channel, the electronic device being located in a defined geographic area;
identify the presence of a mobile device in the defined geographic area, the mobile device associated with a first person;
cause to be established a private communication channel between the electronic device and the mobile device, the causing being in response to the identifying and in response to having received an authorization from the mobile device to establish the private communication channel; and
transmit private information intended for the first person over the private communication channel to the mobile device rather than over the common communication channel, wherein the common communication channel is maintained during the transmission over the private communication channel.

2. The electronic device according to claim 1, wherein the processor is configured to execute the computer-executable instructions to:
receive the authorization from the mobile device at a same or later time as the identifying the presence of the mobile device.

3. The electronic device according to claim 1 or 2, wherein the processor is configured to execute the computer-executable instructions to:
send a request to the mobile device for authorization to establish the private communication channel.

4. The electronic device according to claim 3, wherein the processor is configured to execute the computer-executable instructions to:
send the request in response to detecting the presence of the mobile device in the defined geographic area.

5. The electronic device according to claim 3, wherein the processor is configured to execute the computer-executable instructions to:
send the request in response to the electronic device receiving the private information intended for the first person.

6. The electronic device according to any of claims 2 to 5, wherein the authorization received from the mobile device causes the private communication channel to be established without sending a request to the mobile device for authorization to establish the private communication channel.

7. The electronic device according to any previous claim, wherein the transmitting private information over the private communication channel is performed in response to identifying the presence of a mobile device associated with a different person than the first person in the defined geographic area.

8. The electronic device according to any previous claim, wherein the authorization received from the mobile device was initiated based on user input at the mobile device.

9. The electronic device according to any previous claim, wherein the processor is configured to execute the computer-executable instructions to:
receive, prior to the transmitting, the private information from a remote service.

10. A method for communicating information privately from an electronic device, the method comprising:
outputting information audibly and/or visually over a common communication channel, the electronic device being located in a defined geographic area;
identifying the presence of a mobile device in the defined geographic area, the mobile device associated with a first person;
causing to be established a private communication channel between the electronic device and the mobile device, the causing being in response to the identifying and in response to having received an authorization from the mobile device to establish the private communication channel; and
transmitting private information intended for the first person over the private communication channel to the mobile device rather than over the common communication channel, wherein the common communication channel is maintained during the transmission over the private communication channel.

11. The method of claim 10, further comprising:
receiving the authorization from the mobile device at a same or later time as the identifying the presence of the mobile device.

12. The method of claim 10 or 11, further comprising:
sending a request to the mobile device for authorization to establish the private communication channel.

13. The method of any of claims 10 to 12, further comprising:
receiving, prior to the transmitting, the private information from a remote service.

14. A non-transitory computer-readable medium having computer-readable instructions stored thereon, the computer-readable instructions executable by at least one processor of an electronic device to cause the performance of the operations in accordance with any of claims 10 to 13.

15. A mobile device comprising:
a memory storing computer-executable instructions; and
a processor in communication with the memory and configured to execute the computer-executable instructions to:
detect the presence of an electronic device in a defined geographic area, the electronic device configured to output information audibly and/or visually over a common communication channel, the mobile device also in the defined geographic area;
cause to be established, in response to the detecting, a private communication channel between the mobile device and the electronic device; and
receive private information over the private communication channel rather than over the common communication channel, wherein the common communication channel is maintained while the private information is received over the private communication channel.
